Europäisches Patentamt

European Patent Office

Office européen des brevets

(11) Veröffentlichungsnummer: **0 345 815**
**A2**

## (12) EUROPÄISCHE PATENTANMELDUNG

(21) Anmeldenummer: **89110524.9**

(22) Anmeldetag: **10.06.89**

(51) Int. Cl.⁴: **B23B 51/00**

(30) Priorität: **10.06.88 DE 3819833**

(43) Veröffentlichungstag der Anmeldung:
**13.12.89 Patentblatt 89/50**

(84) Benannte Vertragsstaaten:
**AT BE CH DE ES FR GB IT LI LU NL SE**

(71) Anmelder: **DreBo Werkzeugfabrik GmbH
Ulrichstrasse 22
D-7963 Altshausen(DE)**

(72) Erfinder: **Lohmüller, Johann, Dipl.-Ing.
Salamanderweg 15
D-7980 Ravensburg(DE)**
Erfinder: **Dreps, Klaus
Heuweg 11
D-7963 Altshausen(DE)**

(74) Vertreter: **Patentanwälte Dipl.-Ing. R.
Splanemann Dr. B. Reitzner Dipl.-Ing. K.
Baronetzky
Tal 13
D-8000 München 2(DE)**

(54) Dübelbohrer.

(57) Bei einem Dübelbohrer (14) zur Erzeugung einer Hinterschneidung ist eine ebene Führungsfläche (22) einer Schneidkante (26) radial gegenüberliegend und in eine konzentrische Bohrerspitze mündend an einer konischen Stirnfläche (20) des Dübelbohrers (14) vorgesehen.

FIG. I

## DÜBELBOHRER

Die Erfindung betrifft einen Dübelbohrer zur Erzeugung einer Hinterschneidung, gemäß dem Oberbegriff von Anspruch 1.

Ein derartiger Dübelbohrer ist aus der DE-GM 77 38 522 bekannt. Dieser Dübelbohrer weist eine abgestumpfte Spitze und eine radial abstehende Nase auf, die dazu dienen soll, die Hinterschneidung zu erzeugen.

In der Praxis hat sich diese Art des Dübelbohrers jedoch nicht bewährt, da der Bohrer ziemlich unruhig läuft. Wenn in Material gebohrt werden soll, das Einschlüsse unterschiedlicher Härtegrade aufweist, ist die Verwendung eines derartigen Dübelbohrers nur bedingt möglich, da er sich leicht ablenken läßt, in eine Taumelbewegung gerät und deswegen eine unsymmetrische Hinterschneidung erzeugt.

Außerdem läßt sich bei einem derartigen Dübelbohrer nicht leicht feststellen, wann die Erzeugung der Hinterschneidung abgeschlossen ist. Hierdurch wird entweder der Werkzeugverbrauch zu groß, oder aber die Hinterschneidung ist nicht in ausreichendem Umfang ausgebildet, so daß die Haltekraft des eingebrachten Dübels unbefriedigend ist.

Ferner ist es bekannt, Führungseinrichtungen im Bereich des Sacklocheingangs vorzusehen, die den Dübelbohrer bei der Ausbildung der Hinterschneidung führen sollen. Dieses Verfahren läßt sich jedoch nur bei vergleichsweise kurzen Dübelbohrern einsetzen. Zudem versagt es, wenn die Hinterschneidung an einem Graniteinschluß ausgebildet werden muß. Auch bewirkt die Taumelbewegung der Bohrerspitze eine wenig exakte Ausbildung der Hinterschneidung. Andererseits ist aber gerade bei hinterschnittenen Bohrlöchern die möglichst genaue und reproduzierbare Erstellung der Hinterschneidung wünschenswert, damit die sich theoretisch durch die Hinterschneidung ergebenden Sicherheitsreserven auch praktisch ausgenutzt werden können.

Daher ist es Aufgabe der Erfindung, einen Dübelbohrer gemäß dem Oberbegriff von Anspruch 1 zu schaffen, der auch bei unterschiedlichen Härten des Materials, in dem eine Sackloch-Hinterschneidung zu erstellen ist, und ggf. auch bei sehr tiefen Sacklöchern, zuverlässig arbeitet und mit welchem zugleich feststellbar ist, wann die Erzeugung der Hinterschneidung abgeschlossen ist.

Diese Aufgabe wird erfindungsgemäß durch Anspruch 1 gelöst. Vorteilhafte Weiterbildungen ergeben sich aus den Unteransprüchen.

Durch die erfindungsgemäß vorgesehene konische Führungsfläche wird eine vollflächige Abstützung gegenüber der radial nach außen wirkenden Kraft der Schneidkante zur Erzeugung der Hinterschneidung bereitgestellt. Zusätzlich wird hierdurch eine gleitende automatische Zentrierung eingeleitet, denn die konische Führungsfläche entspricht der Stirnfläche des zuvor erstellten Sacklochs, so daß sie an dieser entlanggleiten kann und sich bei leichtem axialen Druck auf den erfindungsgemäßen Dübelbohrer automatisch zur Sacklochspitze hin bewegt.

Durch die konusförmige, mit der Drehachse konzentrische Bohrerspitze wird hierbei eine spiralige Bewegung der Führungsfläche ermöglicht, die sich, von einer zunächst exzentrischen Stellung der Bohrerspitze gegenüber der Sacklochspitze ausgehend bei der Erzeugung der Hinterschneidung definiert gleitend zur Sacklochachse hin bewegt. Wenn die Bohrerspitze mit der Sacklochachse zusammenfällt, ist die Erzeugung der Hinterschneidung abgeschlossen. Dann verhindert die Führungsfläche, die dann in ihrer ganzen Breite an dem Gegenkonus der Sacklochspitze anliegt, daß weiter gebohrt wird, so daß es leicht möglich ist, festzustellen, wann die Erstellung der Hinterschneidung abgeschlossen ist. Hinzu kommt die Tatsache, daß in diesem Augenblick der Dübelbohrer sich erstmalig konzentrisch um seine Schaftachse dreht, während zuvor - je nach Ausgestaltung - eine Taumelbewegung ausgeführt wurde. Auch die hierdurch bedingte Vibrationsverminderung ist manuell feststellbar, so daß ein zusätzliches Indiz für die Fertigstellung der Hinterschneidung gegeben ist.

Auch bei Einschlüssen im Gestein oder Beton, die eine unterschiedliche Materialhärte aufweisen, kann eine konzentrischsymmetrische Hinterschneidung erzeugt werden, wobei es günstig ist, mit vergleichsweise geringem axialem Druck zu arbeiten und die Fähigkeit des erfindungsgemäßen Dübelbohrers zur Selbstzentrierung auszunutzen. Auch sehr tiefe Hinterschneidungen können hergestellt werden, ohne daß ungünstige Hebelverhältnisse vorliegen. Günstig ist auch, daß keine Hilfsmittel wie Kugeln, Federn oder Gelenke für die Erzeugung der Hinterschneidung verwendet werden müssen. Ferner kann die Ausbildung der Schneidkante in weiten Bereichen geändert werden, um die Form der Hinterschneidung, die sich aus dem Profil der Schneidkante ergibt, den Bedürfnissen anzupassen. Dementsprechend kann die Hinterschneidung sich radial erstreckende Stützflächen oder mehr oder weniger konische Stützflächen aufweisen.

Gemäß einer vorteilhaften Weiterbildung ist es vorgesehen, eine weitere Schneidkante radial beabstandet und der ersten Schneidkante gegenüberliegend radial außerhalb des Schaftes asymmetrisch anzuordnen. Hierbei ist besonders günstig, daß besonders tiefe Hinterschneidungen erstellt werden können, wobei die Hinterschneidung genau positioniert werden kann.

Bei der Ausbildung von zwei Hinterschneidungen ist besonders günstig, daß mit einem entsprechenden Dübel. eine Verspannung an zwei einander gegenüberliegenden Flächen der Hinterschneidungen erfolgen kann, so daß eine in jeder Richtung feste Arretierung, beispielsweise in Beton, möglich ist.

Besonders günstig ist in diesem Zusammenhang die Erstellung von lediglich wenigen hinterschnittenen Bohrlöchern, wenn beispielsweise Decken abgehängt werden sollen. Während bisher häufig aus wirtschaftlichen Gründen hinterschneidungsfreie Sacklochreihen mit entsprechenden Dübeln ausgerüstet wurden und hieran die Deckenabhängung befestigt wurde, sind in letzter Zeit verstärkt Sicherheitsgesichtspunkte zum Tragen gekommen, da Bohrlochreihen im Zugbereich des Betons wie Perforationen wirken. Dies läßt sich aufgrund der wirtschaftlichen Erstellung von hinterschnittenen Sacklöchern mit dem erfindungsgemäßen Dübelbohrer verhindern.

Ferner ist auch die Werkzeugherstellung sehr günstig. Es ist lediglich erforderlich, einen Rundstahl mit dem gewünschten Konus entsprechend der konischen Führungsfläche und mit einer seitlichen Nut im vorderen Endbereich zu versehen. In die Nut wird dann eine Hartmetallplättchen eingelötet, das die Schneidkante bildet.

Bei einer weiteren vorteilhaften Ausgestaltung ist der Schaft weiter hinten etwas verjüngt, um das Einführen des erfindungsgemäßen Dübelbohrers noch zu erleichtern. Ferner kann auch eine entsprechend den gewünschten Erfordernissen ausgebildete Maschinenaufnahme im Anschlußbereich des Dübelbohrers vorgesehen sein.

Bei einer vorteilhaften Weiterbildung ist der Anschlußbereich mit einem Vierkant versehen, in welchem eine Kupplung mit einem Universalgelenk befestigt ist. Hierdurch wird die Erstellung von erfindungsgemäßen hinterschnittenen Bohrlöchern mit einem sehr geringen Eckmaß möglich, denn die Bohrmaschine kann aufgrund der geringen aufzubringenden axialen Kraft und der Selbstzentrierungseigenschaft des erfindungsgemäßen Dübelbohrers auch in einer abgewinkelten Stellung geführt werden.

Günstig für diese Ausführungsform ist die Ausbildung des erfindungsgemäßen Dübelbohrers mit zwei beabstandeten Schneidkanten, da dann die im wesentlichen axialen Kräfte durch den Vortrieb der beiden voneinander beabstandeten Schneidkanten sich aufgrund der gegenüberliegenden Anordnung nahezu kompensieren, so daß auch während der Erstellung der Hinterschneidungen keine allzu starken Vibrationen in der Bohrmaschine bemerkbar sind. Bei dieser Ausführungsform ist die Fertigstellung der Hinterschneidungen dementsprechend durch Zunahme der Bohrerdrehzahl feststellbar.

Gemäß einer weiteren vorteilhaften Ausbildung der Erfindung ist es vorgesehen, eine zur Bohrerspitze hin druckfederbelastete Indikatorbuchse mit einem Prägestempel oder einem klebenden Markierungsring auszurüsten. Solange die Hinterschneidung noch nicht vollständig ausgebildet ist, besteht eine Schrägstellung der Bohrerachse zur Sacklochachse, die verhindert, daß die in dieser Richtung federbelastete Indikatorbuchse in den Sacklocheingang eindringen kann. Vielmehr liegt dann noch ein Außenkonus leicht schräg an dem Sacklocheingang an, wobei eine Kante zwischen dem Außenkonus und dem daran anschließenden Gleitzylinder das Eindringen verhindert.

Der Außenkonus wirkt hierbei zugleich als Stabilisierungselement und einer Taumelbewegung entgegen.

Sobald die Hinterschneidung fertiggestellt ist, und dementsprechend die Schrägstellung der Bohrachse und der Sacklochachse aufgehoben sind, ist auch die Eindringsperre für die Indikatorbuchse, die durch die Kante zwischen dem Außenkonus und dem Gleitzylinder unterstützt wird, aufgehoben, und die Indikatorbuchse gleitet schlagartig mit dem Gleitzylinder in den Sacklocheingang hinein. Der Gleitzylinder weist einen Durchmesser auf, der nur um weniges geringer als der Durchmesser des Sacklochs ist.

Bei Ausrüstung der Indikatorbuchse mit einem klebenden Markierungsring wird dieser so auf die Indikatorbuchse gelegt, daß die Klebstoff aufweisende Oberfläche des Markierungsrings von der Indikatorbuchse abgewandt ist.

Eine sich nach hinten an den Gleitzylinder anschließende Anschlagfläche ist als Prägestempel ausgebildet und schlägt einen Prägeabdruck in die das Sackloch umgebende Wand bzw. Deckenoberfläche oder klebt den Markierungsring auf diese. Mit diesem Abdruck kann das mit einer Hinterschneidung versehene Sackloch als solches gekennzeichnet werden, während es ansonsten schwierig ist, im nachhinein mit geringem Aufwand festzustellen, welche Sacklöcher Hinterschneidungen aufweisen.

Die Erfindung läßt sich gemäß einer weiteren vorteilhaften Ausgestaltung mit einer Bohrmehlabsaugung ausstatten. Hierzu wird im Bereich der Bohrerspitze eine Saugöffnung angebracht, die schräg nach außen weist und mit einer den Bohrerschaft längs durchtretenden Saugleitung in Strömungsverbindung steht. Über ein Anschlußteil und eine Manschette ist ein gegenüber dem Schaft drehbeweglich gelagerter Saugauslaß vorgesehen, wozu die Saugleitung mit einer den Bohrerschaft quer durchtretenden Querbohrung in Strömungsverbindung steht, die von einem Saugraum in der Manschette umgeben ist. Mit dieser Absaugeinrichtung, die an ein an sich bekanntes Sauggerät angeschlossen werden kann, kann das bei der Ausdehnung der Hinterschneidung anfallende Bohrmehl und gegebenenfalls Bohrklein unmittelbar am Ort der Entstehung abgesaugt werden. Wenn die Absaugvorrichtung zusammen mit der Indikatorbuchse verwendet wird, ist es günstig, über einen entsprechenden Kanal oder Schlitz den Zutritt von Saugluft von außen in das Sackloch hinein sicherzustellen.

Dieser dient dann zugleich zur Vereinfachung des Zusammenbaus, wobei nämlich die Hartmetallplatte durch den Schlitz geführt werden kann.

Ferner ist es möglich, eine Vorsatzverlängerung als Zusatzteil zu einem erfindungsgemäßen Dübelbohrer vorzusehen und mit solchen auswechselbaren Vorsatzverlängerungen eine oder mehrere Hinterschneidungen beabstandet vom Sacklochgrund unter Verwendung der erfindungsgemäßen Maßnahmen auszubilden. Die mehrere Hinterschneidungen beabstandet vom Sacklochgrund unter Verwendung der erfindungsgemäßen Maßnahmen auszubilden. Die Vorsatzverlängerung wird mit ihrem bohrerseitigen Innenkonus auf die Bohrerspitze aufgesteckt und so verschwenkt, daß ein Haltearm den die Schneidkante tragenden Vorsprung hintergreift, so daß die Vorsatzverlängerung in axialer Richtung arretiert ist. Die Verdrehsicherung wird durch eine Anlagefläche (Mitnehmer) an einem auch den Haltearm tragenden Tragarm erreicht, welche seitlich an dem Vorsprung des Dübelbohrers anliegt, so daß die Schneidkante die Vorsatzverlängerung bei der Drehung mitnimmt.

Die Vorsatzverlängerung ist zur gegenüberliegenden Seite hin offen ausgebildet, so daß sie leicht aufgesteckt werden kann. Dementsprechend ist der Körper der Vorsatzverlängerung gegenüber der Bohrerachse unsymmetrisch und weist eine exzentrische Körperachse auf. Koaxial zu der Achse des Innenkonus (entsprechend der Bohrerachse) ist ein Außenkonus an dem anderen Ende des Körpers der Vorsatzverlängerung vorgesehen, der beim Einsatz der Vorsatzverlängerung die ebene Führungsfläche bildet.

Gemäß einer vorteilhaften Ausgestaltung der Erfindung ist es vorgesehen, daß eine im wesentlichen konzentrische Saugleitung in dem Bohrerschaft vorgesehen ist, die die Saugöffnung mit einer unter Unterdruck stehenden Absaugeinrichtung verbindet.

Gemäß einer vorteilhaften Ausgestaltung der Erfindung ist es vorgesehen, daß eine an den Bohrerschaft angeschlossene Absaugeinrichtung eine Manschette aufweist, in der der Bohrerschaft drehbeweglich gelagert ist und deren Auslaß mit der Saugleitung in Strömungsverbindung steht.

Gemäß einer vorteilhaften Ausgestaltung der Erfindung ist es vorgesehen, daß eine Vorsatzverlängerung einen an die Bohrerspitze angepaßten Innenkonus und einen diesem gegenüberliegenden Außenkonus aufweist und an dem Dübelbohrer lösbar befestigt ist.

Gemäß einer weiteren vorteilhaften Ausgestaltung der Erfindung ist es vorgesehen, daß die Bohrerachse, die Achse des Innenkonus und die Achse des Außenkonus zueinander koaxial sind und der Körper der Vorsatzverlängerung eine Körperachse aufweist, die zu diesen Achsen exzentrisch ist.

Gemäß einer weiteren vorteilhaften Ausgestaltung der Erfindung ist es vorgesehen, daß die Vorsatzverlängerung eine an das Profil eines Vorsprungs der Schneidkante angepaßte Anlagefläche für die in eine Drehrichtung drehfeste Lagerung der Vorsatzverlängerung an der Bohrerspitze und einen den Vorsprung umgreifenden Haltearm aufweist.

Gemäß einer weiteren vorteilhaften Ausgestaltung der Erfindung ist es vorgesehen, daß der Haltearm und der Tragarm zusammen den Bohrerschaft zu etwa 300° und höchstens soweit umgreifen, daß das Hartmetallplättchen durch den verbleibenden Spalt durchführbar ist.

Gemäß einer weiteren vorteilhaften Ausgestaltung der Erfindung ist es vorgesehen, daß der Bohrerschaft mit dem Hartmetallplättchen lösbar, insbesondere über einen Gewindeanschluß, mit einem Anschlußteil verbunden ist.

Gemäß einer weiteren vorteilhaften Ausgestaltung der Erfindung ist es vorgesehen, daß die Indikatorbuchse mit einem Markierungs- oder Klebering ausgerüstet ist, dessen von der Indikatorbuchse abgewandte Oberfläche Klebstoff aufweist.

Gemäß einer weiteren vorteilhaften Ausgestaltung der Erfindung ist es vorgesehen, daß der Durchmesser des vorderen Endbereichs knapp geringer als der Durchmesser des Sacklochs abzüglich der doppelten Tiefe der Hinterschneidung ist.

Gemäß einer vorteilhaften Ausgestaltung der Erfindung ist es vorgesehen, daß die Vorsatzverlängerung auswechselbar gehalten ist und mehrere Hinterschneidungen mit Vorsatzverlängerungen unterschiedlicher Länge an einem Sackloch ausbildbar sind.

Weitere Einzelheiten, Vorteile und Merkmale ergeben sich aus der nachfolgenden Beschreibung mehrerer Ausführungsbeispiele der Erfindung anhand der Zeichnung.

Es zeigen:

Fig. 1 eine Seitenansicht des vorderen Teils eines erfindungsgemäßen Dübelbohrers vor Ausbildung der Hinterschneidung;

Fig. 2 eine Ansicht der Ausführungsform gemäß Fig. 1 nach fertiggestellter Hinterschneidung;

Fig. 3 eine Ansicht des vorderen Teils einer Ausführungsform eines erfindungsgemäßen Dübelbohrers unter Verwendung einer besonderen Ausbildung der Schneidkante;

Fig. 4 eine Ansicht des vorderen Teils einer Ausführungsform eines erfindungsgemäßen Dübelbohrers unter Verwendung einer weiteren besonderen Ausbildung der Schneidkante;

Fig. 5 eine Ansicht des vorderen Teils einer Ausführungsform eines erfindungsgemäßen Dübelbohrers unter Verwendung einer weiteren besonderen Ausbildung der Schneidkante;

Fig. 6 eine Ansicht des vorderen Teils einer Ausführungsform eines erfindungsgemäßen Dübelbohrers unter Verwendung einer weiteren besonderen Ausbildung der Schneidkante;

Fig. 7 eine Ansicht einer Ausführungsform eines erfindungs-Dübelbohrers mit zwei voneinander beabstandeten Schneidkanten vor Erstellung der Hinterschneidung;

Fig. 8 eine Ansicht der Ausführungsform gemäß Fig. 7 nach Fertigstellung der Hinterschneidung;

Fig. 9 eine teilweise geschnittene Seitenansicht der Ausführungsform gemäß Fig. 9 vor Erstellung der Hinterschneidung;

Fig. 10 eine Seitenansicht einer weiteren Ausführungsform eines erfindungsgemäßen Dübelbohrers nach Fertigstellung der Hinterschneidung;'

Fig. 11 eine Ansicht eines vorderen Teils der Ausführungsform des erfindungsgemäßen Dübelbohrers gemäß Fig. 9 unter Verwendung einer abgewandelten Schneidkante;

Fig. 12 eine Ansicht eines vorderen Teils der Ausführungsform des erfindungsgemäßen Dübelbohrers gemäß Fig. 9 unter Verwendung der Schneidkante gemäß Fig. 6;

Fig. 13 eine Ansicht eines vorderen Teils der Ausführungsform des erfindungsgemäßen Dübelbohrers gemäß Fig. 9 unter Verwendung der Scheidkante gemäß Fig. 5;

Fig. 14 eine Ansicht eines vorderen Teils der Ausführungsform des erfindungsgemäßen Dübelbohrers gemäß Fig. 9 unter Verwendung der Schneidkante gemäß Fig. 3;

Fig. 15 eine teilweise geschnittene Seitenansicht eines Details des erfindungsgemäßen Dübelbohrers in der Ausführungsform gemäß Fig. 10, nämlich des Anschlusses des Bohrerschafts bei Verwendung einer Absaugeinrichtung;

Fig. 16 eine Abwandlung des Bohrerschaftanschlusses nach Fig. 15, z.B. durch Löten oder mit einem Konusanschluß;

Fig. 17 eine teilweise geschnittene Seitenansicht einer gegen über Fig. 10 abgewandelten Ausführungsform unter Verwendung einer Indikatorbuchse, aber ohne Absaugeinrichtung;

Fig. 18 eine teilweise geschnittene Seitenansicht einer erfindungsgemäßen Vorsatzverlängerung und einen Querschnitt dieser von oben und von der Seite;

Fig. 19 einen Schnitt durch eine erfindungsgemäße Bohrerspitze bei Verwendung einer Absaugeinrichtung von der Seite sowie eine Ansicht von oben;

Fig. 20 eine Ansicht entsprechend Fig. 20, jedoch nach Ausbildung der ersten und vor Ausbildung der zweiten Hinterschneidung; und

Fig. 21 eine Seitenansicht eines erfindungsgemäßen Dübelbohrers unter Verwendung der Vorsatzverlängerung nach Fertigstellung der zweiten Hinterschneidung unter Verwendung der Ausführungsform gemäß Fig. 9 und 10.

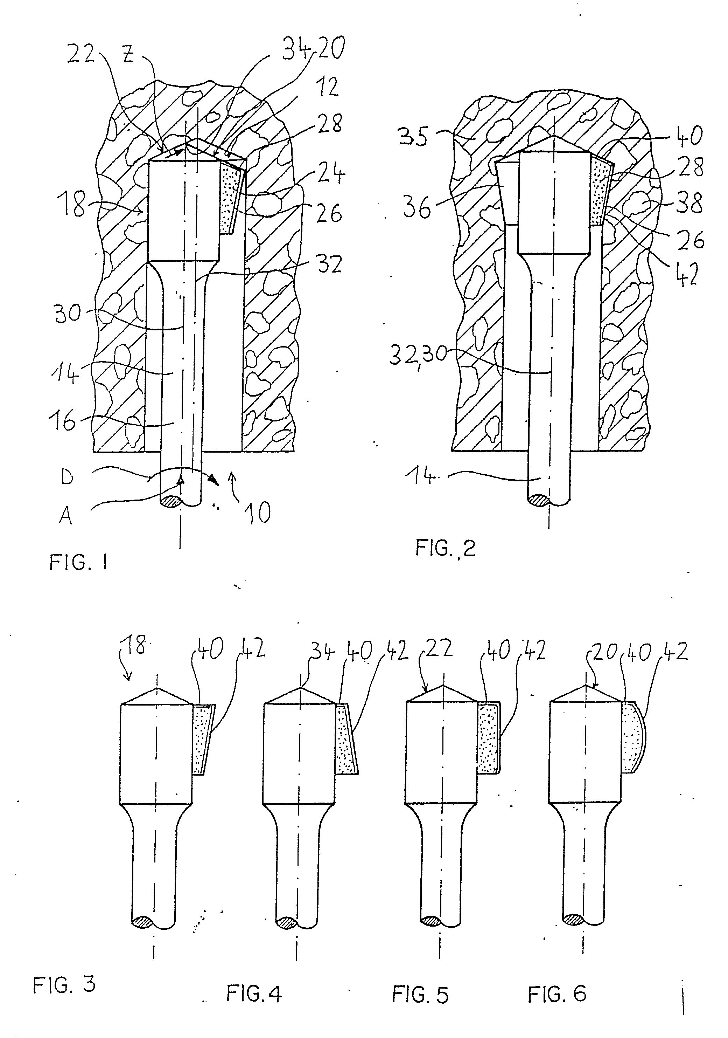

In der Darstellung gemäß Fig. 1 ist ein Sackloch 10 ersichtlich, das mittels eines handelsüblichen Bohrers erstellt wurde. Aufgrund der Ausbildung der Hauptschneide des Bohrers weist der Sacklochboden einen Sacklochkonus 12 auf, der der Ausbildung der Bohrerspitze entspricht, die je nach Material unterschiedlich ist. Bei Beton ergibt sich dementsprechend ein Sacklochkonus 12 mit einem Öffnungswinkel von etwa 130°.

In das Sackloch 10 wird nach Fertigstellung der erfindungsgemäße Dübelbohrer 14 eingeführt, der einen Schaft 16 aufweist, an den sich ein vorderer Endbereich 18 anschließt, der im Beispielsfalle einen größeren Durchmesser als der Schaft 16 aufweist.

Der vordere Endbereich 18 weist eine Stirnfläche 20 auf, die als konische Führungsfläche 22 ausgebildet ist.

Seitlich an dem vorderen Endbereich 18 und radial außerhalb des Schafts 16 ist ein Vorsprung 24 angeformt, der eine Schneidkante 26 aufweist. Die Schneidkante 26 liegt der Führungsfläche 22 radial gegenüber. Hierzu besteht der Vorsprung 24 mit der Schneidekante 26 aus einem Hartmetallplättchen 28, das in eine Nut in dem vorderen Endbereich 18 des erfindungsgemäßen Dübelbohrers 14 eingelötet ist. Damit schützt das Hartmetallplättchen 28 zugleich die Führungsfläche 22 vor Verschleiß. Der Konuswinkel der Stirnfläche 20 entspricht dem Konuswinkel des Sacklochkonus 12. Bei der Drehung in Richtung des Pfeils D des erfindungsgemäßen Dübelbohrers 14 gleitet die Führungsfläche 22 in dem Sacklochkonus 12 entlang, wobei der Druck auf den Sacklochkonus 12 durch die ebene Ausbildung der Führungsfläche 22 ziemlich gering ist, auch wenn die axial in Richtung des Pfeils A aufgebrachte Kraft vergleichsweise groß ist. Aufgrund des Kräfteparallelogramms besteht an der Führungsfläche 22 bei Ausübung einer Kraft in Richtung des Pfeils A neben der zum Sacklochkonus 12 senkrechten Kraftkomponente eine Kraftkomponente in Richtung dem Pfeils Z zur Zentrierung einer Drehachse 30 des Dübelbohrers 14 konzentrisch zu einer Achse 32 des Sacklochs 10.

Bei fertiggestellter Hinterschneidung, wie sie in Fig. 2 dargestellt ist, befindet sich eine Bohrerspitze 34 konzentrisch in dem Sacklochkonus 12, während sich die Schneidkante 26 in Beton 35 eingegraben hat und dort eine ebenfalls konzentrischsymmetrische Hinterschneidung 36 erzeugt hat.

Die Führungsfläche 22 erstreckt sich in radialer Richtung gesehen von der Bohrerspitze 34 bis zum Außenumfang des vorderen Endbereichs 18 des Dübelbohrers 14, so daß in diesem Bereich des Sacklochkonus 12 bei Erstellung der Hinterschneidung 36 aufgrund der geringen Flächenpressung kein Material abgetragen oder verdichtet wird.

Der Beton 35 ist mit Einschlüssen 38 versehen, die eine andere Festigkeit aufweisen. Dennoch erfolgt die Erstellung der Hinterschneidung 36 völlig symmetrisch, ohne daß die Schneidkante 26 durch die Einschlüsse 38 abgelenkt werden könnte. Auch dies ist auf die besondere Ausbildung der Führungsfläche 22 zurückzuführen.

In dem in Fig. 1 und 2 dargestellten Ausführungsbeispiel ist der Schaft 16 gegenüber dem vorderen Endbereich 18 verjüngt ausgebildet. Dies dient zur leichteren Einführung in ein Sackloch wie auch zur Verminderung der drehenden Masse.

Die Schneidkante 26 weist eine Vorderschneidkante 40 und eine Seitenschneidkante 42 auf. Am günstigsten für die Erstellung einer Hinterschneidung bei vergleichsweise geringer Belastung der Schneidkante pro Längeneinheit ist die in den Figuren 1 und 2 dargestellte Ausbildung der Vorderschneidkante 40 und der Seitenschneidkante 42, wobei zusätzlich der Vorteil entsteht, daß die Hinterschneidung in der Verlängerung des Sacklochkonus mit dem Sacklochkonuswinkel an der Stirnfläche ausgebildet wird.

Gewünschtenfalls können jedoch auch andere Formen der Schneidkante vorgesehen sein, wie es aus den Figuren 3 bis 6 ersichtlich ist. Die Schneidkantenausbildung kann dabei dem entsprechenden Bedarf ohne weiteres angepaßt werden, wobei lediglich ein entsprechendes Hartmetallplättchen 28 zu verwenden ist.

Günstigerweise lassen sich ferner Standard-Hartmetallplättchen 28 für einen erfindungsgemäßen Dübelbohrer 14 verwenden, so daß die Werkzeugkosten sehr gering gehalten werden können.

In der in Fig. 3 dargestellten Ausbildung des Hartmetallplättchens 28 ist die Seitenschneidkante 42 zur Bohrerspitze 34 hin divergierend ausgebildet und entspricht insofern der Seitenschneidkante, wie sie in den Figuren 1 und 2 dargestellt ist, während die Vorderschneidkante 40 radial verläuft.

Für die Erstellung einer anderen Hinterschneidungsform ist gemäß der Ausführungsform in Fig. 4 lediglich das Hartmetallplättchen um 180° zu drehen, so daß die Seitenschneidkante 42 zur Bohrerspitze hin konvergierend verläuft.

Die Verwendung eines rechteckigen Hartmetallplättchens gemäß Fig. 5 führt zu einer achsparallelen Seitenschneidkante 42 und einer radialen Vorderschneidkante 40.

Gemäß der Ausführung in Fig. 6 ist die Seitenschneidkante 42 ballig ausgebildet. Dies kann in bestimmten Anwendungsfällen günstig sein, wenn eine entsprechend geformte Ausbauchung an dem Dübel vorgesehen ist.

Entsprechend der Form der Seitenschneidkante 42 ergibt sich nach Fertigstellung der Hinterschneidung 36 eine Tragfläche 44 der Hinterschneidung, auf welcher sich dann der verwendete Dübel abstützt.

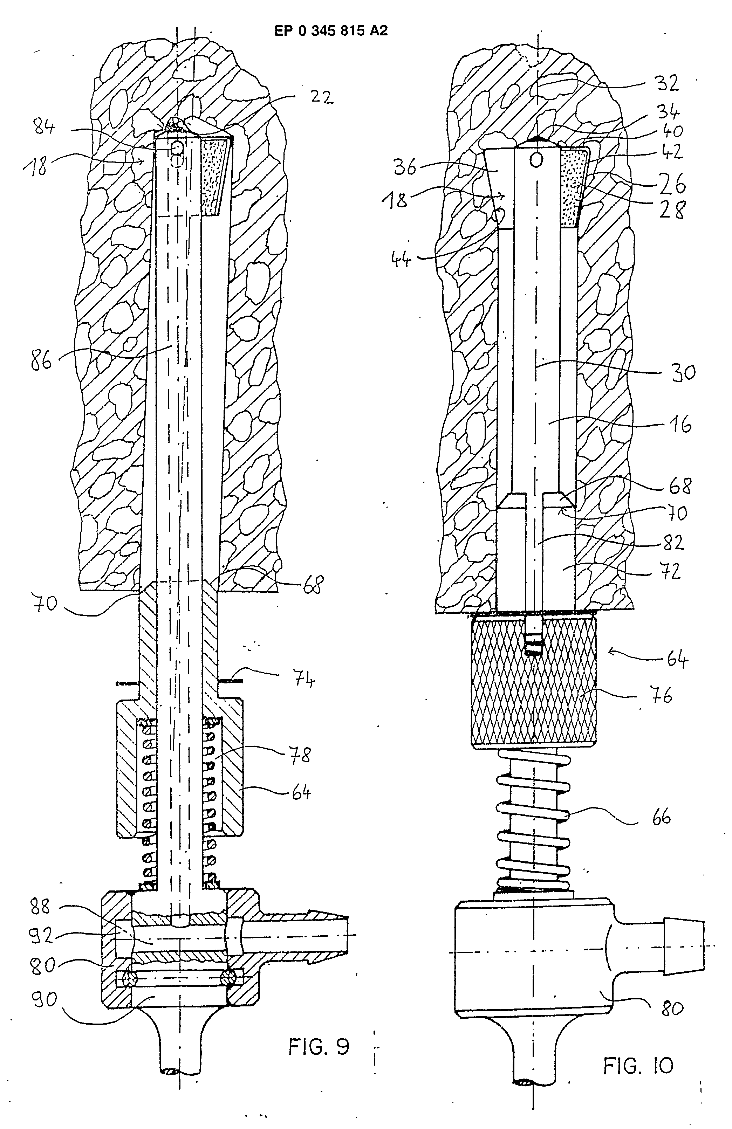

Bei der Ausführungsform gemäß Fig. 7 ist der vordere Endbereich 18 in einer der Ausführungsform gemäß Fig. 1 entsprechenden Weise ausgebildet. Der Schaft 16 ist bei dieser Ausführungsform jedoch nicht unmittelbar hinter dem vorderen Endbereich 18 verjüngt, sonder weist vielmehr einen zylinderförmigen Abschnitt 46 auf, der in seinem Durchmesser dem Durchmesser des vorderen Endbereichs 18 entspricht.

Am Ende des zylinderförmigen Abschnitts 46 ist ein weiteres Hartmetallplättchen 48 mit einer weiteren Schneidkante 50 angebracht, wobei die Schneidkante 50 der Schneidkante 26 um 180° versetzt gegenüberliegt. Die Ausbildung des Hartmetallplättchens 48 entspricht der des Hartmetallplättchens 28, wobei eine Vorderschneidkante 52 und eine Seitenschneidkante 54 vorgesehen sind.

Beim Beginn der Bohrung ist bei dieser Ausführungsform die Drehachse 30 nicht parallel zur Sacklochachse 32. Dementsprechend führt die den erfindungsgemäßen Dübelbohrer antreibende Bohrmaschine eine unschädliche, leichte Taumelbewegung aus, wenn diese nicht mit einer entsprechenden Kupplung ausgeglichen wird.

Nach Fertigstellung der Hinterschneidungen, wobei durch die Schneidkante 50 eine weitere Hinterschneidung 56 erzeugt wird, fallen Drehachse 30 und Sacklochachse 32 wieder zusammen, so daß das Fertigstellen der Bohrung auch an dem Ausbleiben der Taumelbewegung ersichtlich ist. Der erfindungsgemäße Dübelbohrer kann nun entnommen werden.

Bei der Ausbildung eines hinterschnittenen Bohrlochs mit einem Doppelhinterschneidungsbohrer gemäß Fig. 8 kann ein Spezialdübel verwendet werden, der eine Abstützung an einander zugewandten oder voneinander abgewandten Flächen der Hinterschneidungen 36 und 56 erlaubt. Wahlweise können hierfür entweder die Tragfläche 44 der Hinterschneidung 36 und eine Stirnfläche 58 der Hinterschneidung 56 oder eine Stirnfläche 60 der Hinterschneidung 36 zusammen mit einer Stützfläche 62 der Hinterschneidung 56 verwendet werden. Dies ermöglicht die selbsttätig feste Lagerung eines entsprechenden Hinterschneidungsdübels.

Der erfindungsgemäße Dübelbohrer kann auch bei durchgesteckter Montage - wie bei vorgesetztem Sichtbeton, durch eine Isolierung oder durch Kacheln hindurch - verwendet werden. Beim Einführen ist die Ausführungsform gemäß Fig. 7 und 8 leicht abzukanten, während bei der Ausführungsform gemäß Fig. 1 bis 6 eine in jeder Stellung zu der Bohrlochachse parallele Drehachse 30 möglich ist. Durch diese Parallelität wird auch zugleich eine Taumelbewegung vermieden, und die eingeleiteten Kräfte werden nur dem gewünschten Zweck, nämlich der Erstellung der Hinterschneidung 36, zugeführt.

Der erfindungsgemäße Dübelbohrer in der Ausführungsform gemäß Fig. 9 weist eine Form der Schneidkante 26 auf, die im wesent lichen der gemäß Fig. 3 entspricht. Eine sich radial erstreckende Vorderschneidkante 40 an dem dortigen Hartmetallplättchen 28 schließt sich an eine Seitenschneidkante 42 an, deren Anstellwinkel gegenüber der Bohrerachse 30 an die Erfordernisse anpaßbar ist und hier etwa 13° beträgt, so daß die Tragfläche 44 für die Abstützung des Hinterschneidungsdübels die gleiche Abwinkelung gegenüber der Sacklochachse 32 aufweist.

Die Darstellung gemäß Fig. 9 zeigt eine fertiggestellte Hinterschneidung 36, so daß der Schaft 16 des erfindungsgemäßen Dübelbohrers 14 sich koaxial zur Sacklochachse 32 erstreckt. Die Ausführungsform des Dübelbohrers 14 gemäß Fig. 9 unterscheidet sich weiterhin von den bisherigen Ausführungsformen dadurch, daß eine auf dem Bohrerschaft 16 gleitbeweglich geführte Indikatorbuchse 64 vorgesehen ist, die über eine Spiralfeder 66 zur Bohrerspitze 34 gedrückt wird. Die Indikatorbuchse 64 weist an ihrem bohrerspitzenseitigen Ende einen Außenkonus 68 auf, der über eine Kante 70 an einen Gleitzylinder 72 angeschlossen ist und der einen Durchmesserübergang zwischen dem Durchmesser des Bohrerschafts 16 und dem Durchmesser des Gleitzylinders 72 bildet. Am anderen Ende des Gleitzylinders 72 ist eine Prägestempelfläche 74 angebracht, deren Durchmesser größer als der Sacklochdurchmesser ist und die sich radial erstreckt und an ihrer Oberfläche eine Profilierung aufweist. Die Prägestempelfläche 74 liegt auf einem Indikatorbuchsenkörper 76 auf, der ebenfalls einen größeren Durchmesser als den Sacklochdurchmesser aufweist.

Die Spiralfeder 66 weist eine zur Drehrichtung des Dübelbohrers 14 entgegengesetzte Wickelrichtung auf. Hierdurch ist sichergestellt, daß sie sich nicht aufdrehen kann. Zudem ist die Spiralfeder 66 vorzugsweise über Stützscheiben endseitig abgestützt, mit welchen Stützscheiben zugleich der Reibungswiderstand reduziert wird.

Gemäß einer weiteren Ausgestaltung kann die Kante 70 abgerundet sein. Hierdurch und durch den den Anforderungen entsprechenden Konuswinkel des Außenkonus 68 kann die Zentrierfunktion der Führungsfläche 22 unterstützt und einer Taumelbewegung im hinteren Bereich des Dübelbohrers 14 entgegengewirkt werden. Ferner ist es bevorzugt, wenn die Außenfläche der Indikatorbuchse 64 gerändelt ist. Hierdurch ist das manuelle Herausziehen des Gleitzylinders 72 und hierauf folgend das Herausziehen des vorderen Endbereichs 18 des Dübelbohrers 14 aus dem Sackloch 10 erleichtert.

Alternativ kann die Prägestempelfläche 74 auch einstückig an den Körper 76 angeformt sein, wobei jedoch aus Gründen der Austauschbarkeit eine separate Prägestempelfläche 74 bevorzugt ist. Der Körper 76 weist innen eine aus Fig. 10 ersichtliche Ausnehmung 78 auf, die die Spiralfeder 66 aufnimmt. An dem von der Bohrerspitze 34 abgewandten Ende der Spiralfeder 66 ist eine Manschette 80 als Teil einer Absaugeinrichtung vorgesehen, deren nähere Ausbildung anhand von Fig. 10 beschrieben wird.

Gemäß einer weiteren Ausgestaltungsmöglichkeit ist es vorgesehen, das fertiggestellte Hinterschneidungs-Bohrloch mit einem selbstklebenden Etikett zu versehen. Hierzu wird ein Etikett mit der Klebefläche nach oben auf den Gleitzylinder 72 geschoben, so daß es an der Prägestempelfläche 74, die in dieser Ausführungsform unprofiliert ist, aufliegt. Falls der Gleitzylinder 72 in das Sackloch 10 eindringt, gerät die Klebeoberfläche des Etiketts in Anlage mit dem umgebenden Wand- oder Deckenbereich des Sacklochs 10.

In Fig. 10 ist die Ausführungsform des erfindungsgemäßen Dübelbohrers 14 gemäß Fig. 9 in teilweise geschnittener Ansicht vor Erstellung der Hinterschneidung, jedoch nach Einführung in das Sackloch 10 dargestellt.

In diesem Zustand ist der Gleitzylinder 72 gegenüber dem Sackloch 10 verkantet, so daß die Kante 70 des Außenkonus 68 als Anschlag wirkt und aufgrund der Schrägstellung des Gleitzylinders 72 gegenüber dem Sackloch 10 verhindert, daß der Gleitzylinder 72 in das Sackloch 10 hereingleitet, obwohl dessen Außendurchmesser dem Innendurchmesser des Sacklochs entspricht oder etwas geringer ist. Das Verkanten wird durch die Schrägstellung der Achse des Dübelbohrers 14 zu der Achse 32 des Sacklochs bewirkt, welche so lange besteht, wie eine Hinterschneidung noch nicht vollständig ausgebildet ist. Wie aus Fig. 10 weiter ersichtlich ist, weist die Indikatorbuchse 64 eine vergleichsweise große Masse auf, so daß die Prägestempelfläche 74 einen Abdruck auch in vergleichsweise hartem Material erzeugen kann.

Eine weitere vorteilhafte Wirkung der Indikatorbuchse 64 ergibt sich daraus, daß mit dem Einschnappen der Indikatorbuchse 64 angezeigt wird, wann die Hinterschneidung fertiggestellt ist, so daß keine Unklarheiten darüber bestehen, wie lange der Dübelbohrer 14 eingesetzt werden muß.

Der Außenkonus 68, der Gleitzylinder 72 und der vordere Teil des Körpers 76 sind in der aus Fig. 9 ersichtlichen Weise geschlitzt. Dies bewirkt zum einen, daß der Gleitzylinder 72 schlagartig in das Sackloch 10 eindringen kann, sobald die koaxiale Ausrichtung erreicht ist, ohne daß der Luftwiderstand des in dem Sackloch 10 erzeugten Überdrucks dem Eindringen entgegenstehen würde. Zum anderen kann hierdurch die Arbeitsluft für die Absaugeinrichtung, die nachstehend erläutert wird, in den Sacklochinnenraum gelangen. Die Seitenkanten eines Schlitzes 82 an dem Außenkonus 68 sollten hierbei leicht abgerundet sein, um eine Schälwirkung an dem Sacklocheintritt zu vermeiden.

Ferner ist der Schlitz 82 etwa breiter als die Stärke des Hartmetallplättchens 28, um die Montage des erfindungsgemäßen Dübelbohrers 14 zu erleichtern.

Die Absaugeinrichtung arbeitet mit zwei einander gegenüberlie genden Saugöffnungen, von denen eine Saugöffnung 84 dargestellt ist, welche in unmittelbarer Nachbarschaft der Bohrerspitze 34 schräg nach vorn außen in der Bohrerspitze 34 seitlich des Hartmetallplättchens 28 vorgesehen ist. Vorzugsweise sind zwei einander gegenüberliegende Saugöffnungen 84 vorgesehen, die um den Umfang der Bohrerspitze 34 verteilt sind.

Die Saugöffnung 84 ist an eine Saugleitung 86 angeschlossen, die von der Bohrerspitze 34 ausgehend längs durch den Bohrerschaft 16 verläuft, so daß dieser als Rohr ausgebildet ist. Die Saugleitung 86 ist oben über eine Querbohrung 88 abgeschlossen, die in einem gegenüber dem weiter unten liegenden Teil des Bohrerschafts 16 verdickten Anschlußteil 90 vorgesehen ist, welchen sie quer durchtritt. Die Manschette 80 ist auf dem Anschlußteil 90 gelagert. In der Manschette 80 ist ein ringförmiger, die Querbohrung 88 vollständig umgebender Saugraum 92 vorgesehen, der mit einem Auslaß 94 in Verbindung steht. Der Auslaß 94 wird an eine an sich bekannte Absauganlage angeschlossen, so daß das im Bereich der Hinterschneidung 36 anfallende Bohrmehl über die Luftströmung durch den Schlitz 82, entlang des Schafts 16 nach unten, durch die Saugöffnung 84, die Saugleitung 86, die Querbohrung 88, den Saugraum 92 und den Auslaß 94 abgeführt wird.

Es ist günstig, wenn die Abdichtung der Manschette 80 gegenüber dem Anschlußteil 90 nicht vollständig ist, sondern wenn durch das Eintreten von Nebenluft die Luftströmung in allen Betriebszuständen aufrechterhalten wird.

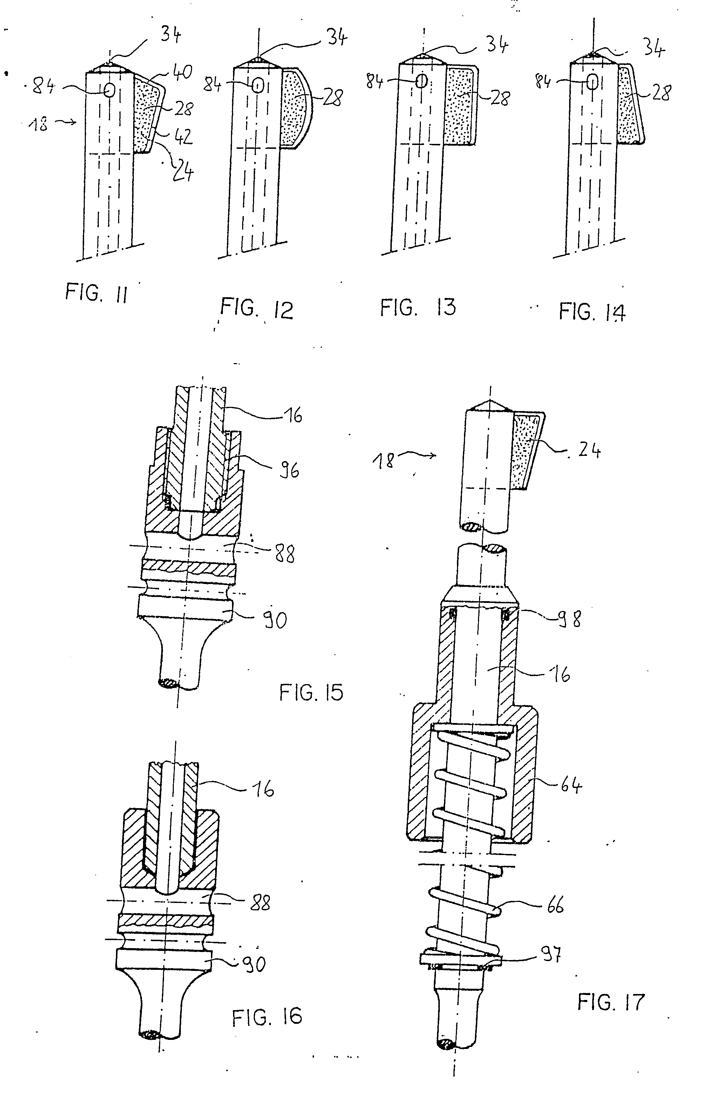

In den Figuren 11 bis 14 sind Ausführungsformen von Bohrerspitzen 34 mit je unterschiedlichen Vorsprüngen 24 bzw. Hartmetallplättchen 28 dargestellt. Wie hieraus ersichtlich ist, kann stets seitlich des Vorsprungs 24 die Absaugöffnung 84 vorgesehen sein, während hinsichtlich der Ausbildung des Hartmetallplättchens 28 die gleichen konstruktiven Freiheiten bestehen, wie es anhand der Fig. 3 bis 6 erläutert wurde.

Die Verbindung des Anschlußteils 90 mit dem Bohrerschaft 16 ist aus Fig. 15 ersichtlich. In dieser Ausführungsform ist in dem Anschlußteil 90 ein Innengewinde ausgebildet, in welches der Bohrerschaft 16 über ein entsprechendes Außengewinde unter Bildung eines Gewindeanschlusses 96 eingeschraubt ist. Mit dieser Ausbildung kann der Bohrerschaft 16 zusammen mit dem entsprechenden Hartmetallplättchen gemäß den Figuren 11 bis 14 auswechselbar gehalten sein, so daß die Formen der Hinterschneidung wie auch die Länge des Bohrerschafts 16 nach Belieben gewählt werden können.

Eine weitere Ausbildung der Verbindung des Anschlußteils 90 mit dem Bohrerschaft 16 ist aus Fig. 16 ersichtlich. Der Bohrerschaft 16 kann in das Anschlußteil 90 eingelötet oder eingepreßt sein, wobei auch eine konische Aufnahme in Betracht kommt.

Es ist auch möglich, die erfindungsgemäße Indikatorbuchse 64 mit einem erfindungsgemäßen Dübelbohrer 14 zu verwenden, ohne eine Absaugeinrichtung vorzusehen. In diesem Fall ist der Bohrerschaft 16 massiv, also nicht als Rohr ausgebildet und weist anstelle des Anschlußteils 90 einen Anschlag 97 für die Spiralfeder 66 auf, der als in einer Nut im Bohrerschaft 14 gelagerter Federring ausgebildet sein kann, so daß diese die Indikatorbuchse 64 über den Bohrerschaft 16 auf die Bohrerspitze 34 zu drücken kann. Wie aus Fig. 17 ersichtlich ist, können innen an dem Gleitzylinder 72 Dichtungen 98 zum Bohrerschaft 16 hin vorgesehen sein, und der Schlitz 82 gemäß Fig. 9 kann entfallen. Diese Ausführungsform, die sich bei geringerem Bohrmehlanfall bzw. der Vornahme von Deckenbohrungen eignet, wirkt beim Anliegen des Außenkonus 68 an dem Sacklocheingang wie eine Abdichtung des Sacklochs 10.

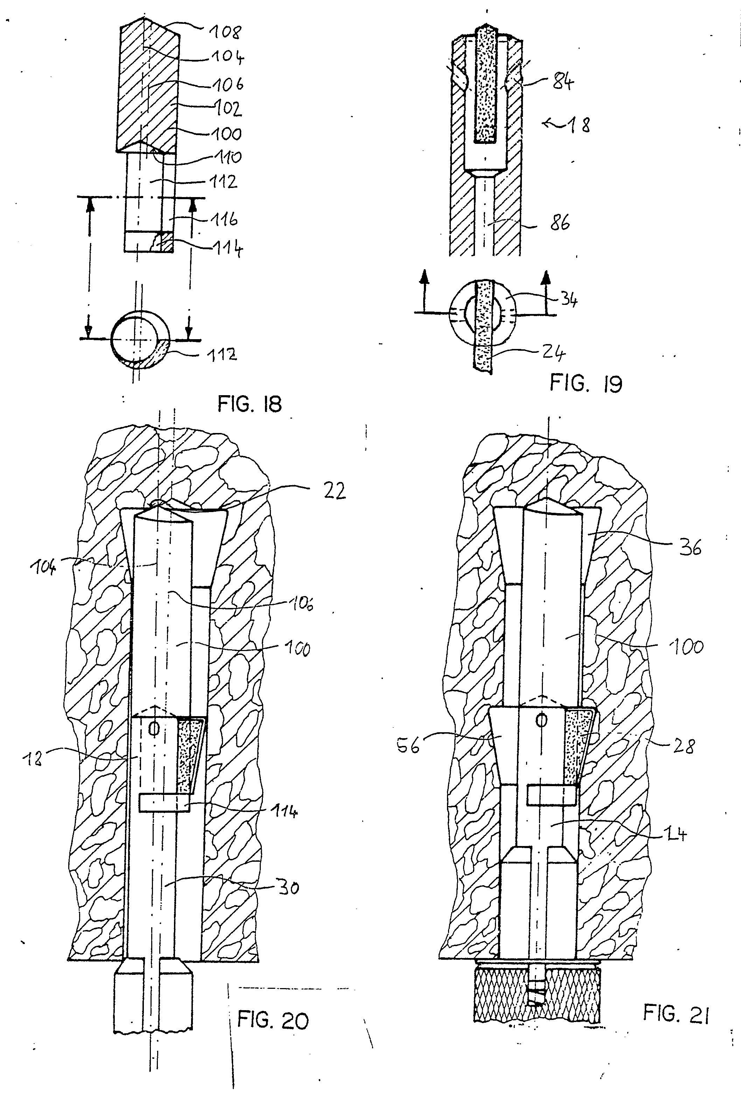

In Fig. 18 ist eine Vorsatzverlängerung 100 dargestellt, die dazu dient, eine der mehrerer erfindungsgemäße Hinterschneidungen von dem Bohrlochgrund beabstandet auszubilden, ohne auf die Ausführungsform eines Dübelbohrers 14 gemäß den Figuren 7 und 8 zurückgreifen zu müssen. Die Vorsatzverlängerung 100 weist einen zylindrischen Körper 102 auf, dessen Körperachse 104 gegenüber der Achse 106 eines Außenkonus 108 an einem Ende des Körpers und der hierzu koaxialen Achse eines Innenkonus 110 exzentrisch ist. Der Innenkonus 110 und der Außenkonus 108 entsprechen in ihrem Konuswinkel der Bohrerspitze, wobei der Außenkonus 108 die konische Stirnfläche 20 bildet.

Seitlich des Innenkonus 110 erstreckt sind ein Tragarm 112 im wesentlichen in axialer Richtung. Der Tragarm 112 trägt einen Haltearm 114, der sich im wesentlichen in tangentialer Richtung erstreckt. Daneben weist der Tragarm 112 eine Anlagefläche 116 auf, deren Funktion nachstehend erläutert ist.

Beim Einsatz der Vorsatzverlängerung 100 wird die Bohrerspitze 34 von der offenen Seite in den Innenkonus 110 eingesetzt und die Vorsatzverlängerung 100 gegenüber der Bohrerspitze 34 so weit gegen die Bohrerdrehrichtung verdreht, daß der Haltearm 114 den Bohrerschaft 16 unterhalb des Hartmetallplättchens 28 bzw. des Vorsprungs 24 umgreift und somit eine Lagerung der Vorsatzverlängerung 100 in axialer Richtung an dem Dübelbohrer 14 bewirkt und zugleich die Anlagefläche 116 seitlich an dem Hartmetallplättchen 28 in Anlage kommt. Mit dieser Anlage ist auch eine tangentiale Verdrehsicherung gegeben, so daß die Vorsatzverlängerung 100 bei Betätigung des Dübelbohrers in Drehrichtung mitgenommen wird, wie es auch aus Fig. 20 ersichtlich ist.

Die teilweise geschnittene Ansicht der Vorsatzverlängerung 100 in Fig. 18 zeigt, daß der Haltearm 114 den Dübelbohrer 14 nur so weit umgreift, daß ein seitliches Einsetzen ohne weiteres möglich ist.

Zugleich dient das Hintergreifen des Vorsprungs 24 durch den Haltearm 114, das eine axiale Arretierung der Vorsatzverlänge rung 100 bewirkt, dazu, die Vorsatzverlängerung 100 aus dem Sackloch 10 sicher herausziehen zu können.

Aus der Darstellung in Fig. 19 ist die Lage und Ausrichtung der Saugöffnungen 84 gegenüber der Bohrerspitze 34 ersichtlich. In dieser alternativen Ausführungsform ist die Saugleitung 86 zur Bohrerspitze 34 hin mit einer Erweiterung abgeschlossen, die es erlaubt, daß das Hartmetallplättchen in einen in der Bohrerspitze 34 vorgesehenen Schlitz über die gesamte Wandstärke eingelötet werden kann, so daß die Auswechselung vergleichsweise leicht ist und zugleich die Führungsfläche 22 über ihre gesamte Erstreckung gegen Verschleiß geschützt ist.

Die Fig. 20 und 21 zeigen den Betrieb eines erfindungsgemäßen Dübelbohrers 14 unter Einsatz einer Vorsatzverlängerung 100, wobei Fig. 20 den Endzustand, d.h., nach Fertigstellung der zweiten Hinterschneidung 56, und Fig. 21 den Zustand des Sacklochs 10 vor Fertigstellung der zweiten Hinterschneidung, jedoch nach Fertigstellung der ersten Hinterschneidung 36 zeigt. Hieraus ist auch die asymmetrische Lage der Körperachse 104 zu der Achse 32 des Sacklochs 10 ersichtlich, während in dem in Fig. 20 dargestellten Zustand die Sacklochachse 32 und die Achse 106 des Außenkonus 108 wie auch die Drehachse 30 des Dübelbohrers 14 zusammenfallen und lediglich die Körperachse 104 außerhalb dieser Achsen liegt.

## Ansprüche

1. Dübelbohrer zur Erzeugung einer Hinterschneidung, mit einem Schaft und einer Schneidkante, die asymmetrisch radial außerhalb des Schafts im vorderen Endbereich des Dübelbohrers angeordnet ist, dadurch **gekennzeichnet,** daß eine ebene Führungsfläche (22) der Schneidkante (26) radial gegenüberliegend in eine konzentrische Bohrerspitze (34) mündend an einer konischen Stirnfläche (20) des Dübelbohrers ausgebildet ist.

2. Dübelbohrer nach Anspruch 1, dadurch gekennzeichnet, daß die Führungsfläche (22) sich in radialer Richtung von dem Außenumfang des vorderen Endbereichs (18) bis zur Bohrerspitze (34) erstreckt und der Winkel der Führungsfläche (22) gegenüber einer Drehachse (30) an den Konuswinkel des Konus (12) eines vorher erstellten Sacklochs (10) angepaßt ist.

3. Dübelbohrer nach einem der Ansprüche 1 oder 2, dadurch gekennzeichnet, daß die Schneidkante (26) eine Seitenschneidkante (42) aufweist, die zur Bohrerspitze (34) hin divergiert.

4. Dübelbohrer nach einem der vorhergehenden Ansprüche, dadurch gekennzeichnet, daß ein Bohrerschaft (16) gegenüber einem vorderen Endbereich (18) des Dübelbohrers (14) verjüngt ausgebildet ist oder im wesentlichen den gleichen Durchmesser aufweist.

5. Dübelbohrer nach einem der vorhergehenden Ansprüche, dadurch gekennzeichnet, daß von der Schneidkante (26) beabstandet eine weitere Schneidkante (50) an dem Dübelbohrer (14) angebracht ist, die radial der Schneidkante (26) gegenüberliegt.

6. Dübelbohrer nach einem der vorhergehenden Ansprüche, dadurch gekennzeichnet, daß die Tiefe der Hinterschneidung (36) der Hälfte der radialen Erstreckung der Schneidkanten (26, 50) von dem vorderen Endbereich (18) nach außen entspricht.

7. Dübelbohrer nach einem der vorhergehenden Ansprüche, dadurch gekennzeichnet, daß der Bohrerschaft (16) eine federbelastete Indikatorbuchse (64) aufweist, die in das Sackloch (10) einschnappt, sobald der Dübelbohrer (14) zentriert ist.

8. Dübelbohrer nach Anspruch 7, dadurch gekennzeichnet, daß die Indikatorbuchse (64) an ihrem Vorderende einen Außenkonus (68) mit einem Konuswinkel von etwa 20 bis 50° aufweist, der über eine Kante (70) an einen Gleitzylinder (72) angeformt ist.

9. Dübelbohrer nach Anspruch 7 oder 8, dadurch gekennzeichnet, daß die Indikatorbuchse (64) eine Prägestempelfläche (74) aufweist, mit welcher bei der Freigabe der Kante (70) an dem Sackloch (10) ein Stempelabdruck auf dem das Sackloch (10) umgebenden Wandbereich ausbildbar ist.

10. Dübelbohrer nach einem der vorhergehenden Ansprüche, dadurch gekennzeichnet, daß quer zur Schneidkante (26), der Bohrerspitze (34) benachbart, eine Saugöffnung (84) angebracht ist, mit welcher Bohrmehl bzw. Bohrklein von dem Grund des Sacklochs (10) absaugbar ist.

11. Dübelbohrer nach Anspruch 1, dadurch gekennzeichnet, daß eine im wesentlichen konzentrische Saugleitung (86) in dem Bohrerschaft (16) vorgesehen ist, die die Saugöffnung (84) mit einer unter Unterdruck stehenden Absaugeinrichtung verbindet.

12. Dübelbohrer nach einem der Ansprüche 11 oder 12, dadurch gekennzeichnet, daß eine an den Bohrerschaft (16) angeschlossene Absaugeinrichtung eine Manschette (80) aufweist, in der der Dohrerschaft (16) drehbeweglich gelagert ist und deren Auslaß (94) mit der Saugleitung (86) in Strömungsverbindung steht.

13. Dübelbohrer nach einem der vorhergehenden Ansprüche, dadurch gekennzeichnet, daß eine Vorsatzverlängerung (100) einen an die Bohrerspitze (34) angepaßten Innenkonus (110) und einen diesem gegenüberliegenden Außenkonus (108) aufweist und an dem Dübelbohrer (14) lösbar befestigt ist.

14. Dübelbohrer nach Anspruch 13, dadurch gekennzeichnet, daß die Bohrerachse, die Achse des Innenkonus (110) und die Achse des Außenkonus (108) zueinander koaxial sind und der Körper (102) der Vorsatzverlängerung (100) eine Körperachse (104) aufweist, die zu diesen Achsen exzentrisch ist.

15. Dübelbohrer nach einem der Ansprüche 13 oder 14, dadurch gekennzeichnet, daß die Vorsatzverlängerung (100) eine an das Profil eines Vorsprungs (24) der Schneidkante (26) angepaßte Anlagefläche (116) für die in eine Drehrichtung drehfeste Lagerung der Vorsatzverlängerung (100) an der Bohrerspitze (34) und einen den Vorsprung (24) umgreifenden Haltearm (114) aufweist.

16. Dübelbohrer nach Anspruch 14, dadurch gekennzeichnet, daß der Haltearm (114) und der Tragarm (112) zusammen den Bohrerschaft (16) zu etwa 300° und höchstens soweit umgreifen, daß das Hartmetallplättchen (28) durch den verbleibenden Spalt durchführbar ist.

17. Dübelbohrer nach einem der vorhergehenden Ansprüche, dadurch gekennzeichnet, daß der Bohrerschaft (16) mit dem Hartmetallplättchen (28) lösbar, insbesondere über einen Gewindeanschluß (96), mit einem Anschlußteil (90) verbunden ist.

18. Dübelbohrer nach einem der Ansprüche 7 bis 17, dadurch gekennzeichnet, daß die Indikatorbuchse (64) mit einem Markierungs- oder Klebering ausgerüstet ist, dessen von der Indikatorbuchse abgewandte Oberfläche Klebstoff aufweist.

19. Dübelbohrer nach einem der Ansprüche 6 bis 18, dadurch gekennzeichnet, daß der Durchmesser des vorderen Endbereichs (18) knapp geringer als der Durchmesser des Sacklochs (10) abzüglich der doppelten Tiefe der Hinterschneidung (36) ist.

20. Dübelbohrer nach einem der Ansprüche 13 bis 19, dadurch gekennzeichnet, daß die Vorsatzverlängerung (100) auswechselbar gehalten ist und mehrere Hinterschneidungen (36) mit Vorsatzverlängerungen (100) unterschiedlicher Länge an einem Sackloch (10) ausbildbar sind.

FIG. I

FIG. 2

FIG. 3    FIG. 4    FIG. 5    FIG. 6

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21